# EUROPEAN PATENT SPECIFICATION

(11) **EP 1 418 740 B1**
(45) Date of publication and mention of the grant of the patent: **30.06.2010**
(21) Application number: 03257000.4
(22) Date of filing: 05.11.2003
(51) Int. Cl.: H04M 3/42, G06F 17/28

(54) **Simultaneous interpretation system and method thereof**
Simultandolmetschen- System und Verfahren
Système et méthode d'interpretation simultanée

(30) Priority: 06.11.2002 KR 2002068580
(43) Date of publication of application: 12.05.2004
(73) Proprietor: SAMSUNG ELECTRONICS CO., LTD., Suwon-City, Kyungki-do (KR)
(72) Inventor: Lee, Jae-won no 807 Seocho ESA APT, Seoul (KR); Jung, Ji-seon, Suwon-city, Kyungki-do (KR); Kim, Jeong-su, Yeongtong-gu, Suwon-si Gyeonggi-do (KR); Lee, Yong-beom no 222-1406 Byuksan APT, Suwon-city, Kyungki-do (KR)
(74) Representative: Anderson, James Edward George

(56) References cited:
- WO-A-02/43360
- US-A- 5 875 422
- US-B1- 6 173 250
- US-B1- 6 385 586
- AKIRA KUREMATSU: "FUTURE PERSPECTIVE OF AUTOMATIC TELEPHONE INTERPRETATION" IEICE TRANSACTIONS ON COMMUNICATIONS, INSTITUTE OF ELECTRONICS INFORMATION AND COMM. ENG. TOKYO, JP, vol. E75 - B, no. 1, 1992, pages 14-19, XP000301563 ISSN: 0916-8516
- PATENT ABSTRACTS OF JAPAN vol. 011, no. 284 (E-540), 12 September 1987 (1987-09-12) & JP 62 082853 A (NEC CORP), 16 April 1987 (1987-04-16)

## Description

The present invention relates to a third-party call control type simultaneous interpretation system and method, and more particularly, to a system and method capable of providing interactive simultaneous interpretation services to talkers and listeners connected with the system through wired/wireless communication networks.

As international exchange has continued to expand, opportunities to converse with or talk on the telephone to foreigners who use another language have increased. Thus, an interpretation system for performing smooth communication with foreigners is now required.

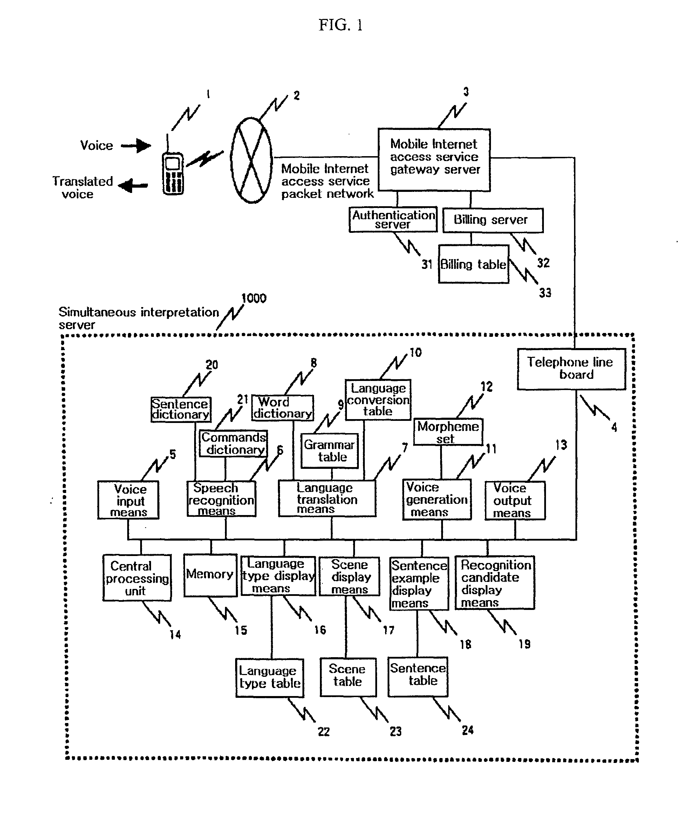

As an interpretation system used to communicate with foreigners, Korean Patent Laid-Open Publication No. 2002-0030693 (entitled "Voice interpretation service method and voice interpretation server") discloses a method wherein the voice of a user is first transmitted to a voice interpretation server and a translated voice is then returned to the user through a telephone capable of using a mobile internet access service, as shown in FIG. 1.

In such a case, the voice interpretation method has an advantage in that an interpretation service can be provided conveniently through the voice interpretation server regardless of the time and position if the user utilizes a predetermined terminal. However, there are problems if the user should hire or purchase the terminal for the interpretation service from a provider and the method is not suitable as a means for communicating with foreigners who are remotely located because it is a one-way interpretation service between the user and the voice interpretation server.

In order to solve these problems, Korean Patent Laid-Open Publication No. 2002-54192 (entitled "System and method for automatically interpreting telephone information for foreigners") discloses a system of automatically interpreting telephone information, as an interactive interpretation system for performing communication with foreigners who are remotely located and use a different language. The system is configured in such a manner that when a foreigner user asks a question in his/her own language, the question is automatically interpreted and then is transmitted to a native operator and the response of the native operator to the question is then automatically interpreted and transmitted to the foreigner user.

However, when the foreign user connects with the simultaneous interpretation system through a wired/wireless telephone, the system for automatically interpreting telephone information is configured to connect the call of the foreign user to the native operator connected with the simultaneous interpretation system. Thus, the system can substantially provide the interpretation services only to the foreign user and the native operator. Therefore, there is a limitation in that the simultaneous interpretation system is not suitable to an interpretation means for communicating between any two users, who use different languages, (e.g., a Korean user A and an English user B) with each other.

US 5875422 discloses an automatic language translation technique for use in a telecommunications network. In the technique, a connection is provided between a called party and a calling party. Information generated by the parties is translated according to their language preferences.

Kurematsu, Akira: "Future Perspective of Automatic Telephone Interpretation", IEICE Transactions on Communications, Vol. E75-B, No. 1, January 1992, Pages 14-19 summarizes future automatic telephone interpretation systems that use a multimedia intelligent communication network.

According to an aspect of the present invention, there is provide a third-party call control type simultaneous interpretation system, comprising: a Computer-Telephony Integration, hereinafter CTI, board for establishing a traffic channel between a talker and a listener; a CTI control module for generating an event, in response to a button signal input through the CTI board, to control the CTI board to perform a basic telephone action; and an interpretation module for recognizing a voice of the talker/listener input through the CTI board and translating the voice into a predetermined language, **characterized in that**: the system further comprises a main control module for controlling actions of the CTI control module in accordance with a predetermined interpretation scenario, wherein the predetermined interpretation scenario defines an action flow of the simultaneous interpretation system, the action flow comprising a telephone connection step, an automatic interpretation step and an interpretation transmission step; and basic telephone actions performed by the CTI board are configured as job units each comprising a sequence of CTI control functions.

According to another aspect of the present invention, there is provided a third-party call control type simultaneous interpretation method, comprising the steps of: a telephone connection step of establishing a traffic channel between a talker and a listener when the talker connects with a simultaneous interpretation system in accordance with a predetermined interpretation scenario; an automatic interpretation step of, when an event is generated in a Computer-Telephony Integration, hereinafter CTI, control module in response to a button signal input by the talker or listener through a CTI board, translating an input voice of the talker or listener into a predetermined language in response to the generated event based on the predetermined interpretation scenario; and an interpretation transmission step of controlling the CTI board in accordance with the interpretation scenario and transmitting the translated voice to the other party in accordance with the predetermined interpretation scenario, wherein the predetermined interpretation scenario defines an action flow of the simultaneous interpretation system, the action flow comprising the telephone connection step, the automatic interpretation step and the interpretation transmission step, and wherein basic telephone functions performed by CTI board are configured as job units each comprising a sequence of CTI control functions.

The present invention thus provides a simultaneous interpretation system and method for allowing users, who use different languages and are remotely located, to conveniently communicate with one another.

The above and other objects and features of the present invention will become apparent from the following description of preferred embodiments given in conjunction with the accompanying drawings, in which:
FIG. 1 is a view showing a configuration of a conventional simultaneous interpretation system;

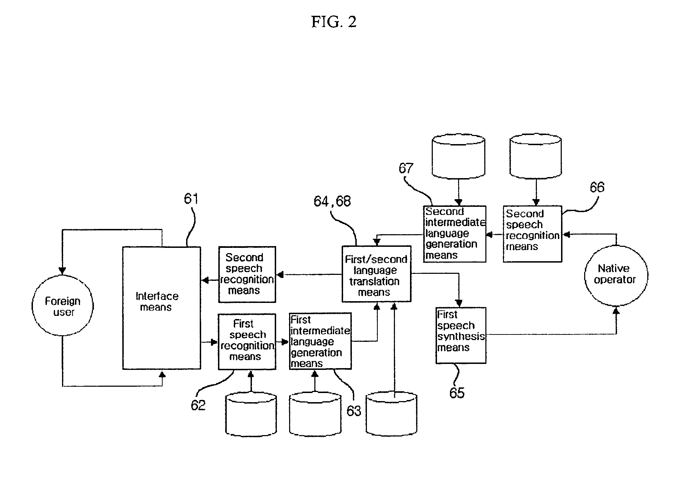

FIG. 2 is a view illustrating a conventional simultaneous interpretation method;
FIG. 3 is a view schematically showing a configuration of a network for use in a third-party call control type simultaneous interpretation system according to the present invention;
FIG. 4 is a view schematically showing a configuration of the third-party call control type simultaneous interpretation system according to the present invention;
FIG. 5 is a view illustrating operations of a working section shown in FIG. 4;
FIG. 6 is a view showing an example of an interpretation scenario according to the present invention; and
FIG. 7 is a flowchart illustrating an entire process of the third-party call control type simultaneous interpretation method according to the present invention.

Hereinafter, the configuration and operation of a third-party call control type simultaneous interpretation system and method according to the present invention will be explained in detail with reference to the accompanying drawings.

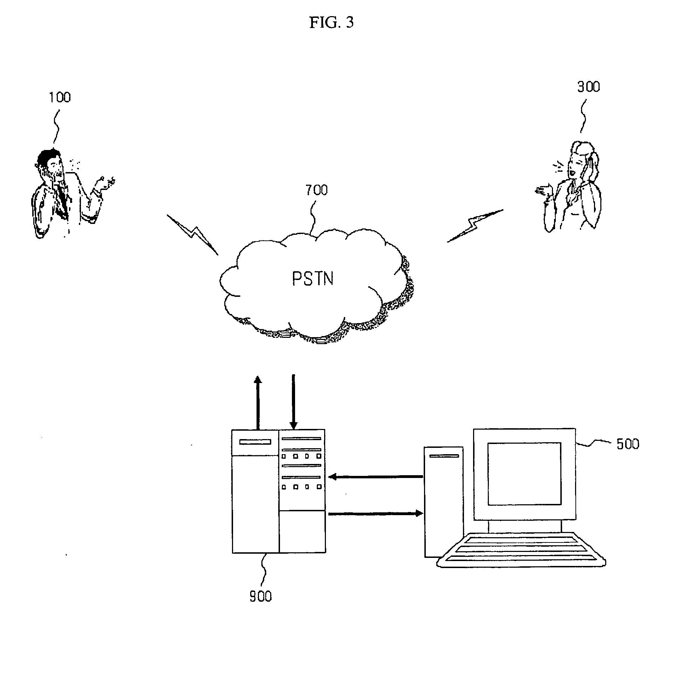

FIG. 3 is a view schematically showing a configuration of a network for use in the third-party call control type simultaneous interpretation system according to the present invention. Referring to FIG. 3, when a talker 100 connects with a third-party call control type simultaneous interpretation system 500 through a public switched telephone network 700 (hereinafter, referred to as "PSTN") and a private automatic branch exchange 900 (hereinafter, referred to as "PBX"), the simultaneous interpretation system 500 receives a telephone number of a listener 300 from the talker 100 to establish the predetermined traffic channel. Then, the system automatically translates the voice of the talker 100 input through the established traffic channel and transmits the translated voice of the talker to the listener 300, and also automatically translates the voice of the listener 300 and transmits the translated voice to the talker 100.

For example, a case where a traffic channel is established between a Korean talker 100 and an English listener 300 will be discussed. If the talker 100 speaks in Korean "I'd like to confirm my reservation, please.", the simultaneous interpretation system 500 translates the wording into English and transmits an English voice, i.e. "I'd like to confirm my reservation, please." to the listener 300, corresponding to the translated wording. If the listener 300 replies "One moment, please.", the simultaneous interpretation system 500 translates the English reply of the listener 300 into Korean and transmits a Korean voice corresponding to the wording "One moment, please." to the talker 100.

In this embodiment of the present invention, it can be understood that the talker 100 and the listener 300 are users of communication terminals that can connect with the simultaneous interpretation system 500 through an IP network or the PSTN 700 such as a wired telephone, a mobile phone and a personal computer. In a case where the users connect with the simultaneous interpretation system 500 through a personal computer, a router (not shown) and a Voice over IP gateway (VoIP G/W) for connecting with the IP network (not shown) connectable to the PSTN 700 may be further included in the users.

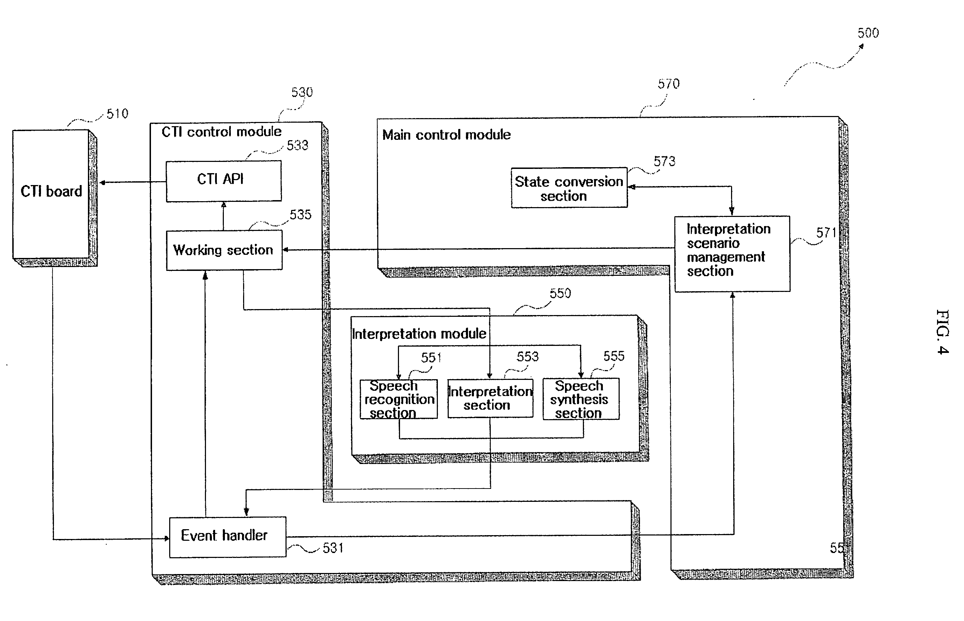

FIG. 4 is a view schematically showing the configuration of the third-party call control type simultaneous interpretation system according to the present invention. Referring to FIG. 4, the third-party call control type simultaneous interpretation system 500 of the present invention comprises a CTI board 510, a CTI control module 530, an interpretation module 550, and a main control module 570. The simultaneous interpretation system 500 is configured in such a manner that interactive simultaneous interpretation services can be provided to the talker 100 and listener 300 connected through the wired/wireless communication network by controlling the CTI control module 530 using the main control module 570.

Computer-Telephony Integration (CTI) is a technique for managing telephone calls using the computer. Main functions of the CTI include a voice store and forward function for recording and playing a voice input from a user, a digit capture function for recognizing dialing digits, and an out-dial function for dialing a specific telephone number to connect a call.

The CTI board 510 is configured to perform the above CTI functions, installed in the computer, and used to control a telephone circuit by connecting to the PBX. Since the CTI board 510 is identical to a CTI board commonly used in the automatic response system (ARS) in view of their configurations and operations, a detailed explanation thereof will be omitted.

The CTI control module 530 controls the CTI board 510 and the interpretation module 550 with the request of the main control module 570 and includes an event handler 531 for generating events in response to button signals input through the CTI board 510, a CTI application programming interface (API) 533 including CTI control functions for controlling the CTI board 510, and a working section 535 for calling the CTI control functions in order from the CTI API 533 with the request of the main control module 570 and performing basic telephone actions (e.g., dialing, answering and hanging up of the telephone).

The event handler 531 generates events in response to button signals input through the CTI board 510 and outputs messages according to the respective events to the main control module 570. For example, if it is detected that the telephone has been called from the talker 100 through the CTI board 510, the event handler 531 transmits an EVT_WAITCALL message to the main control module 570 according to the call reception.

The CTI API 533 is a telephony application program interface (TAPI) used for communication between the computer and the telephone, and can be understood as a kind of library in which the CTI control functions capable of controlling the CTI board 510 are stored. When the CTI control functions are called, the CTI API 533 causes the CTI control functions to be decoded as command words comprehensible by the CTI board 510 and controls the CTI board 510 in accordance with the decoded command words. Here, TAPI available from Microsoft may be generally used as the CTI API.

Interfaces for the basic telephone actions such as out-dial, digit capture and voice recording can be provided through the CTI API 533. For example, when a telephone number of the listener 300 to which the talker 100 wishes to call is input, a DTMF tone detection function stored in the CTI API 533 is called so that the CTI API 533 can recognize the telephone number input by the talker 100.

The CTI control functions stored in the CTI API 533 will be more specifically explained as follows. The CTI control functions such as dx_dial, dx_sethook, dx_getdig, dx_fileopen, dx_play and dx_rec mean a dialing action, a hook setting action for answering or hanging up the phone, an action for detecting which buttons are pressed by the talker or listener, a file opening action, a file playing action, and a voice recording action, respectively.

However, since these CTI control functions are implemented to perform only a single function such as dialing, hook initialization, DTMF tone detection, and file playing, there is a disadvantage in that they should be separately and repeatedly called in order to perform the basic telephone actions such as the dialing, answering and hanging up of the telephone. Further, whenever the CTI control functions are called, the current state thereof should be confirmed and necessary CTI control functions should also be additionally requested.

For example, when the talker 100 inputs the telephone number of the listener 300, the simultaneous interpretation system 500 calls the CTI control function dx_dial from the CTI API 533, generates a DTMF signal corresponding to the telephone number of the listener 300 through the CTI board 510, and attempts to connect the call. At this time, the CTI control functions to be executed later are determined according to whether the listener 300 can talk over the telephone. That is, if the tone signals are input from the telephone line of the listener 300 through the CTI board 510, the simultaneous interpretation system recognizes that the talker 100 can talk over the telephone, and then, calls ATDX_CPTERM as the following CTI control function and transmits ringing signals to the telephone of the listener 300. On the other hand, if a busy signal is input from the telephone line of the listener 300 through the CTI board 510, the simultaneous interpretation system recognizes that the listener 300 cannot talk over the telephone, and then, calls dx_play as the following control function and outputs a call connection failure message. That is, in order to perform the phone dialing action, the CTI control function, dx_dial, should be called and then the different CTI control functions should also be called in accordance with the signals input from the CTI board 510.

Therefore, in order to solve the above problems, the present invention is configured such that the CTI control functions are configured as a work unit capable of performing the basic telephone actions and are then called in order through the working section 535 to perform the basic telephone actions. Hereinafter, the working section 535 will be explained more in detail.

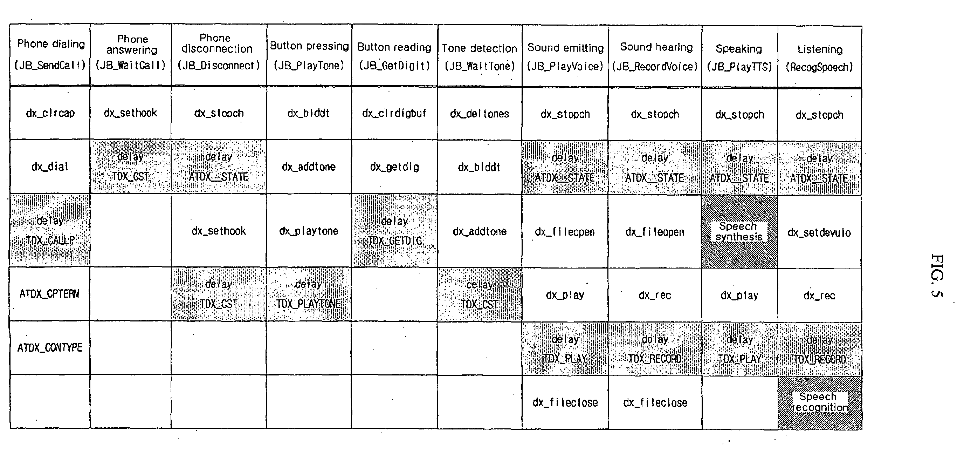

In general, a job means a unit of work that a computer can execute. In the present invention, the job can be understood as a sequence of CTI control functions configured to perform the basic telephone actions. An example of the basic telephone actions configured as a job unit is shown in FIG. 5.

Referring to FIG. 5, the jobs (JB_*) such as phone dialing, phone answering, phone disconnection or hanging up, button pressing, button reading, tone detection, voice forward, voice store, speaking and listening are configured as a sequence of CTI control functions. In particular, the CTI control functions in the shaded block are used to confirm the events generated from the event handler 531 or current state thereof and configured such that the following CTI control functions necessary at the next stage are called in response to the events generated from the event handler 531.

Therefore, since the CTI control functions are configured as a job unit as described above, the basic telephone actions can be made in accordance with only one job request without individually and repeatedly calling the CTI control functions. Accordingly, system control performance and speed can be improved.

In the meantime, the interpretation module 550 translates the voice of the talker 100 or listener 300 input from the CTI board 510 into a language recognizable by the other party, and includes a speech recognition section 551, a translation section 553, and a speech synthesis section 555.

The speech recognition section 551 recognizes the voice of the talker 100 or listener 300 input through the CTI board 510 and converts the recognized voice into a sentence (text). To this end, a hidden Markov model for calculating similarities between models using estimated values of the models obtained on the basis of changes in voice spectrums may be used as a speech recognition algorithm.

The translation section 553 translates the sentences recognized in the speech recognition section 551 into languages recognizable by the talker 100 or listener 300. To this end, the conventional rule-based translation algorithm through sentence analysis, lexical-based translation algorithm through language phenomenon, example-based translation algorithm through a large volume of examples, and the like can be used as they are. Thus, a detailed explanation thereof will be omitted.

The speech synthesis section 555 synthesizes the speech from the sentences which have been recognized from the speech recognition section 551 or translated from the translation section 553, and outputs the synthesized speech. To this end, a Holmant text-to-speech synthesis algorithm, which is disclosed in the technical paper "From Text to Speech" (Cambridge University Press, 1987, pp. 16-150) by J. Allen, M. S. Hunnicutt, D. Klatt et al., may be used as a text-to-speech algorithm.

Algorithms other than the aforementioned speech recognition algorithm, translation algorithm and text-to-speech synthesis algorithm may be used, and the present invention is not limited to these algorithms.

Furthermore, it cannot be known when any events will be generated from the talker 100 and the listener 300 in a kind of third-party call control type simultaneous interpretation system according to the present invention. Thus, in order to provide smooth interpretation services, actions necessary for the next stages should be able to be performed in accordance with the generated events.

To this end, the main control module 570 of the present invention controls the general operations related to the interactive simultaneous interpretation service based on an interpretation scenario to be described later. Hereinafter, the main control module 570 will be explained more in detail.

The main control module 570 includes an interpretation scenario management section 571 for selecting the action to be executed in the next stage on the basis of a predetermined interpretation scenario when the events are generated in the CTI control module 530, and a state conversion section 573 for converting a current state into the next state in response to the current state conversion action selected from the interpretation scenario management section 571.

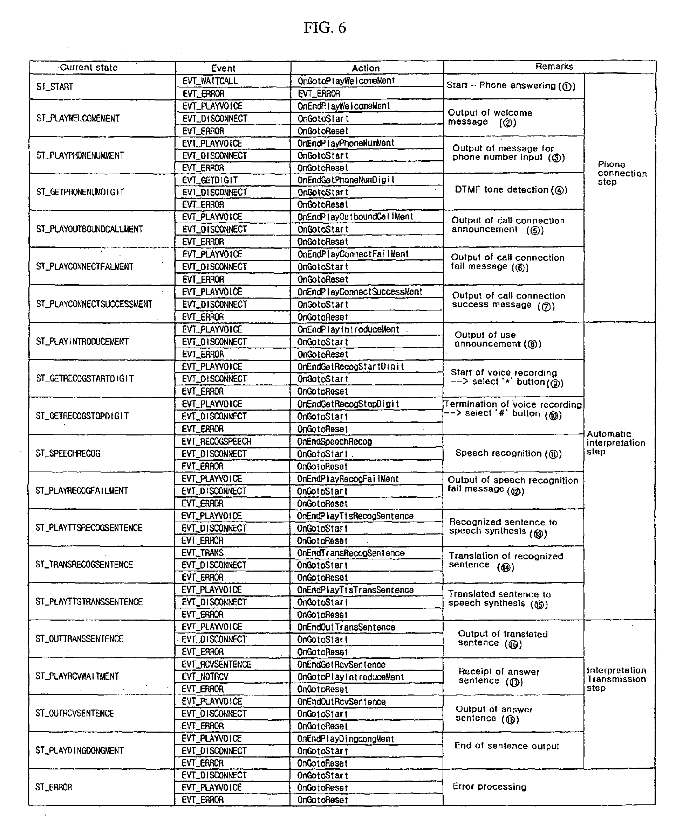

The interpretation scenario is an action flow of the simultaneous interpretation system 500, which has been beforehand defined such that a smooth simultaneous interpretation service can be provided to the talker 100 and the listener 300. The actions, which should be executed at the next stage in response to the events generated at the current state, are predetermined in the interpretation scenario of which one example is in turn illustrated in FIG. 6.

Referring to FIG. 6, the interpretation scenario is formulated in tables in the format of <'current state', 'event', 'action'>, wherein the 'current state' means an currently operating state (ST_*), the 'event' means a generated event (EVT_*), and the 'action' means an action (On_*) that should be performed at the next stage in response to the generated event. Further, the 'action' means an action for selecting the current state conversion action to convert the current state into the next state in response to the generated event and selecting the basic telephone actions necessary for the next stage.

That is, the interpretation scenario management section 571 selects the action (On_*) to be executed at the next stage on the basis of the previously stored interpretation scenario when events are generated from the event handler 531. If the interpretation scenario management section 571 selects an action (On_*), the current state conversion action and basic telephone action necessary for the next stage are selected in accordance with the selected action. Accordingly, the state conversion section 573 converts the current state into the next state in response to the selected current state conversion action, and the working section 535 performs the jobs necessary for the next stage in response to the selected basic telephone action.

For example, if the talker 100 connects with the simultaneous interpretation system 500, the event handler 531 of the CTI control module 530 transmits a call receiving event to the interpretation scenario management section 571 of the main control module 570. Then, the interpretation scenario management section 571 references <ST_START, EVT_WAITCALL, OnGotoPlayWelcomeMent> for processing the call receiving event from the interpretation scenario, converts the current state from ST_START to ST_PlayWelcomeMent by means of the state conversion section 573, and performs the action of outputting a connection welcoming message to the talker 100.

As mentioned above, since the interpretation scenario is configured in the format of <current state, event, action>, the action necessary for the next stage can be immediately performed regardless of what events are generated from the talker 100 and the listener 300 so that smooth communication between the talker 100 and the listener 300 who use different languages can be made.

Hereinafter, the third-party call control type simultaneous interpretation method of the present invention will be explained in detail with reference to the accompanying drawings.

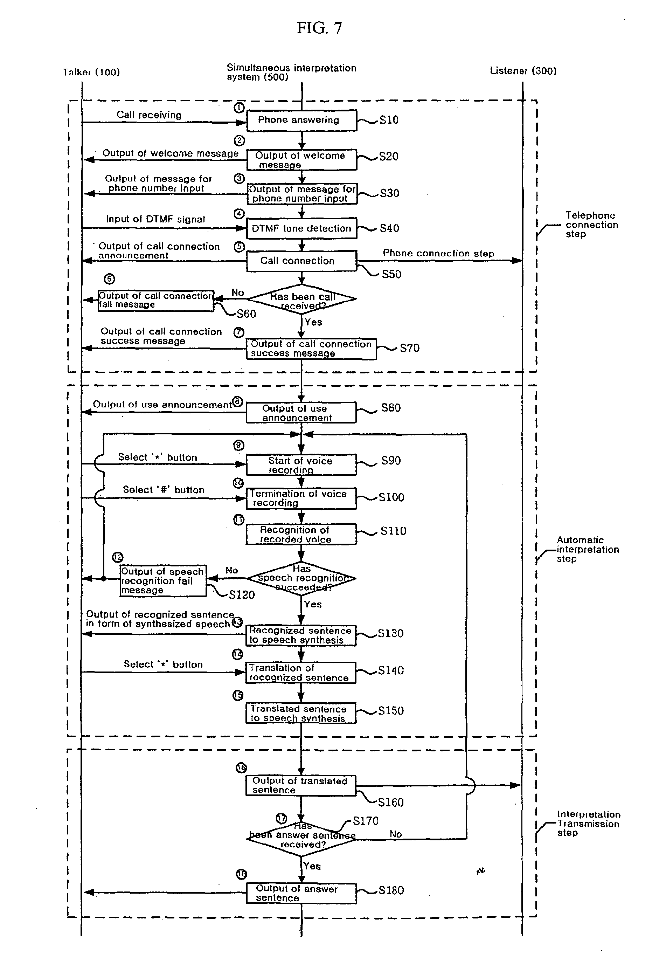

FIG. 7 is a flowchart illustrating an entire process of the third-party call control type simultaneous interpretation method of the present invention, which comprises a telephone connection step (S10-S70) of establishing a traffic channel between the talker 100 and the listener 300 when the talker 100 connects with the simultaneous interpretation system 500, an automatic interpretation step (S80-S150) of translating the input voice of the talker 100 and the listener 300 into a language recognizable by the other party in accordance with a predetermined interpretation scenario, and an interpretation transmission step (S160-S170) of transmiting the translated voice of the talker 100 or the listener 300 to the other party in accordance with the interpretation scenario.

First, when the talker 100 calls a phone to connect with the simultaneous interpretation system 500, the call receiving event EVT_WAITCALL is transmitted to the interpretation scenario management section 571 through the event handler 531. At this time, the interpretation scenario management section 571 selects the action OnGotoPlayWelcomeMent for processing the call receiving event in accordance with <ST_START, EVT_WAITCALL, OnGotoPlayWelcomeMent> of the interpretation scenario, converts the current state into a welcome message output state by means of the state conversion section 573 according to the selected action OnGotoPlayWelcomeMent, and performs the phone answering action by means of the working section 535 (S10). Here, since the operations of the event handler 531, the working section 535, the interpretation scenario management section 571, and the state conversion section 573 have been explained in detail in connection with FIG. 4, they will be briefly described together with the simultaneous interpretation system 500 for the convenience of explanation.

Next, after the phone answering action has been completed, the simultaneous interpretation system 500 outputs a welcome message in accordance with <ST_PLAYWELCOMEMENT, EVT_PLAYVOICE, OnEndPlayWelcomeMent> of the interpretation scenario (S20). Then, the system outputs a message requesting the input of the telephone number of the listener 300 in accordance with <ST_PLAYPHONENUMMENT, EVT_PLAYVOICE, OnEndPlayPhoneNumMent> of the interpretation scenario (S30).

When the talker 100 inputs the digits through the telephone, the DTMF tone signal event EVT_GETDIGIT is produced. Thus, the simultaneous interpretation system 500 detects the DTMF tone signals input from the talker 100 and recognizes the telephone number of the listener 300 in accordance with <ST_GETPHONENUMDIGIT, EVT_GETDIGIT, OnEndGetPhoneNumDigit> of the interpretation scenario (S40).

After the telephone number of the listener 300 has been recognized as such, the simultaneous interpretation system 500 outputs the call connection announcement to the talker 100 and simultaneously performs the phone dialing action to attempt to connect the call to the telephone number of the listener 300 in accordance with <ST_PLAYOUTBOUNDCALLMENT, EVT_PLAYVOICE, OnEndPlayOutboundCallMent> of the interpretation scenario (S50).

Then, the interpretation system 500 determines whether the call has been connected based on whether the listener 300 has replied to the call. If the call connection has failed, the interpretation system 500 outputs the call connection fail message to the talker 100 in accordance with <ST_PLAYCONNECTFAILMENT, EVT_PLAYVOICE, OnEndPlayConnectFailMent> of the interpretation scenario (S60). On the other hand, if the call connection has succeeded, the interpretation system outputs the call connection success message to the talker in accordance with <ST_PLAYCONNECTSUCESSMENT, EVT_PLAYVOICE, OnEndPlayCormectSucessMent> of the interpretation scenario (S70).

In a case where the call connection has succeeded, i.e., the call receiving event has been generated, the simultaneous interpretation system 500 outputs a use announcement for use in the interpretation services to the talker 100 and the listener 300 in accordance with <ST_PLAYINTRODUCEMENT, EVT_PLAYVOICE, OnEndPlayIntroduceMent> (S80).

In the meantime, the simultaneous interpretation system 500 according to the present invention controls two traffic channels between the talker 100 and the simultaneous interpretation system 500 and between the simultaneous interpretation system 500 and the listener 300 at the same time so that the interpretation services can be provided in real time to both the talker 100 and the listener 300. Since the interpretation system of the present invention controls these two traffic channels at the same time according to the same interpretation scenario, only a case where the traffic channel between the talker 100 and the simultaneous interpretation system 500 is controlled will be described by way of example for the convenience of explanation.

After the use announcement for use in the interpretation services has been output, the simultaneous interpretation system 500 records the voice input by the talker 100 in accordance with <ST_GETRECOGSTARTDIGIT, EVT_PLAYVOICE, OnEndGetRecogStartDigit> of the interpretation scenario when the talker 100 presses a predetermined button (e.g., * button) for his/her speech input (S90).

When the talker 100 presses a predetermined button (e.g., # button) to terminate a recording process during the voice recording, the simultaneous interpretation system 500 terminates the recording of the voice of the talker 100 in accordance with <ST_GETRECOGSTOPDIGIT, EVT_PLAYVOICE, OnEndGetRecogStopDigit> of the interpretation scenario (S100).

Then, the simultaneous interpretation system 500 recognizes the recorded voice or speech of the talker 100 in accordance with <ST_SPEECHRECOG, EVT_RECOGSPEECH, OnEndSpeechRecog> of the interpretation scenario (S110). As a result, if speech recognition has failed, the simultaneous interpretation system outputs the speech recognition fail message in accordance with <ST_PLAYRECOGFAILMENT, EVT_PLAYVOICE, OnEndPlayRecogFailMent> of the interpretation scenario and then returns to a state where it is ready to receive the voice of the talker 100 (S120). If the speech recognition has succeeded, the system synthesizes the speech from the recognized sentence in accordance with <ST_PLAYTTSRECOGSENTENCE, EVT_PLAYVOICE, OnEndPlayTtsRecogSentence> and then transmits the speech to the talker 100 (S130).

When the recognized sentence synthesized into speech is transmitted to the talker 100, the talker 100 confirms whether his/her input contents are correct. The talker 100 selects the * button if the input contents are correct, whereas the talker selects the * button if the contents are incorrect. In a case where the talker selects the * button, the simultaneous interpretation system 500 translates the recognized sentence into a language recognizable by the listener 300 in accordance with <ST_TRANSRECOGSENTENCE, EVT_TRANS, OnEndTransRecogSentence> of the interpretation scenario (S140). After the translation has been completed, the interpretation system 500 synthesizes the translated sentence into the speech and outputs the speech to the listener 300 in accordance with <ST_PLAYTTSTRANSSENTENCE, EVT_PLAYVOICE, OnEndPlayTtsTransSentence> of the interpretation scenario (S 150).

Next, the simultaneous interpretation system 500 transmits the translated voice of the talker 100 to the listener 300 in accordance with <ST_OUTTRANSSENTENCE, EVT_PLAYVOICE, OnEndOutTransSentence> of the interpretation scenario (S160). After the synthesized speech of the translated sentence has been output, a predetermined alarm sound (e.g., dingdong) indicative of the termination of sound output may be output in accordance with <ST_PLAYDINGDONGMENT, EVT_PLAYVOICE, OnEndPlayDingdongMent> of the interpretation scenario.

Next, the simultaneous interpretation system 500 checks whether there is a reply to the transmitted voice from the listener 300 in accordance with <ST_PLAYRCVWAITMENT, EVT_RCVSENTENCE, OnEndGetRcvSentence> of the interpretation scenario (S170). If an answer sentence is received from the listener 300, the simultaneous interpretation system 500 transmits the answer sentence to the talker 100 in accordance with <ST_OUTRCVSENTENCE, EVT_PLAYVOICE, OnEndOutRcvSentence> of the interpretation scenario (S 180).

As described above, the simultaneous interpretation system 500 of the present invention controls all the operations associated with the interactive simultaneous interpretation services in accordance with the interpretation scenario in which the actions to be performed at the next stages are defined beforehand. Therefore, the talker 100 can freely speak by telephone with the listener 300 who uses a different language and is remotely located.

According to the third-party call control type simultaneous interpretation system and method of the present invention, communication between different language users can be smoothly made without purchasing additional specific terminals. Thus, there is an advantage in that the simultaneous interpretation services can be used at a low cost.

Although the present invention has been described in connection with the preferred embodiments shown in the drawings, it will be apparent to those skilled in the art that various changes and modifications can be made thereto without departing from the scope of the present invention. Therefore, the true scope of the present invention should be defined by the appended claims.

## Claims

1. A third-party call control type simultaneous interpretation system (500), comprising:
a Computer-Telephony Integration, hereinafter CTI, board (510) for establishing a traffic channel between a talker (100) and a listener (300);
a CTI control module (530) for generating an event, in response to a button signal input through the CTI board, to control the CTI board to perform a basic telephone action; and
an interpretation module (550) for recognizing a voice of the talker/listener input through the CTI board and translating the voice into a predetermined language,
**characterized in that**:
the system further comprises a main control module (570) for controlling actions of the CTI control module (530) in accordance with a predetermined interpretation scenario, wherein the predetermined interpretation scenario defines an action flow of the simultaneous interpretation system, the action flow comprising a telephone connection step, an automatic interpretation step and an interpretation transmission step; and
basic telephone actions performed by the CTI board (510) are configured as job units each comprising a sequence of CTI control functions.

2. The system as claimed in claim 1, wherein the CTI control module (530) comprises an event handler (531) for generating the event in response to the button signal input through the CTI board; a CTI Application Programming Interface (533), hereinafter API, including CTI control functions for the CTI board; and a working section (535) for calling the CTI control functions in a given order from the CTI API and performing the basic telephone action in accordance with the main control module.

3. The system as claimed in claim 2, wherein the basic telephone action includes phone dialing, phone answering, phone disconnection or hanging up, button pressing, button reading, tone detection, voice forward, voice store, speaking and listening.

4. The system as claimed in any one of claims 1 to 3, wherein the interpretation module (550) includes a speech recognition section (551) for recognizing the voice input through the CTI and converting the recognized voice into text; a translation section (553) for translating the text into a predetermined language; and a speech synthesis section (555) for synthesizing a speech from the text recognized through the speech recognition section or the text translated through the translation section and outputting the synthesized speech.

5. The system as claimed in claim 1, wherein the interpretation scenario includes a current state conversion action selected according to a current state and the event generated in the CTI control module, and basic telephone actions.

6. The system as claimed in claim 5, wherein the main control module (570) includes an interpretation scenario management section (571) for selecting the current state conversion action and the basic telephone action on the basis of the predetermined interpretation scenario when the event is generated in the CTI control module, and a state conversion section (573) for converting the current state into the next state in response to the current state conversion action selected from the interpretation scenario management section.

7. A third-party call control type simultaneous interpretation method, comprising the steps of:
a telephone connection step (S10, S20, S30, S40, S50, S60, S70) of establishing a traffic channel between a talker (100) and a listener (300) when the talker connects with a simultaneous interpretation system (500) in accordance with a predetermined interpretation scenario;
an automatic interpretation step (S80, S90, S 100, S110, S120, S130, S140, S150) of, when an event is generated in a Computer-Telephony Integration, hereinafter CTI, control module (530) in response to a button signal input by the talker or listener through a CTI board (510), translating an input voice of the talker or listener into a predetermined language in response to the generated event based on the predetermined interpretation scenario; and
an interpretation transmission step (S160, S 170, S 180) of controlling the CTI board in accordance with the interpretation scenario and transmitting the translated voice to the other party in accordance with the predetermined interpretation scenario,
**characterized in that** the predetermined interpretation scenario defines an action flow of the simultaneous interpretation system, the action flow comprising the telephone connection step, the automatic interpretation step and the interpretation transmission step,
and wherein basic telephone functions performed by CTI board (510) are configured as job units each comprising a sequence of CTI control functions.

8. The method as claimed in claim 7, wherein the automatic interpretation step (S80, S90, S100, S110, S120, S130, S140, S150) comprises:
recording the input voice of the talker or listener in response to the event based on the predetermined interpretation scenario when the event is generated in the CTI control module in response to the button signal input by the talker or listener through the CTI board (S90, S100); and
recognizing the recorded voice and translating the recognized voice into the predetermined language through an interpretation module (550) in accordance with the predetermined interpretation scenario (S 110, S120, S 130, S 140, S150).

9. The method as claimed in claim 8, wherein the recognizing and translating step (S110, S120, S130, S140, S150) comprises:
recognizing the recorded voice and converting the recognized voice into text (S 110, S130);
translating the text into the predetermined language (S 140); and
synthesizing a speech from the translated text (S150).

## Patentansprüche

1. Simultandolmetschungssystem (500) mit Anrufdurchleitungssteuerung, umfassend:
eine Baugruppe (510) der Computer-Telefonie-Integration, nachfolgen CTI genannt, zum Einrichten eines Verkehrskanals zwischen einem Sprecher (100) und einem Hörer (300),
ein CTI-Steuerungsmodul (530) zum Erzeugen eines Vorgangs in Abhängigkeit von einem Schaltsignal, das durch die CTI-Baugruppe eingegeben ist, um die CTI-Baugruppe so anzusteuern, dass sie eine Telefonbasisaktion durchführt, und
ein Dolmetschungsmodul (550) zum Erkennen einer Sprachansage, die vom Sprecher/Hörer durch die CTI-Baugruppe eingegeben ist, und
Übersetzen der Sprachansage in eine vorgegebene Sprache,
**dadurch gekennzeichnet, dass**:
das System weiter ein Hauptsteuerungsmodul (570) zum Steuern von Aktionen des CTI-Steuerungsmoduls (530) gemäß einem vorgegebenen Dolmetschungsszenario umfasst, wobei das vorgegebene Dolmetschungsszenario einen Aktionsfluss des Simultandolmetschungssystems definiert, wobei der Aktionsfluss einen Telefonverbindungsschritt,
einen automatischen Dolmetschungsschritt und einen Dolmetschungsübertragungsschritt umfasst, und
Telefonbasisaktionen, die durch die CTI-Baugruppe (510) durchgeführt werden, als Arbeitseinheiten ausgebildet sind, die jeweils eine Abfolge von CTI-Steuerungsfunktionen umfassen.

2. System nach Anspruch 1, wobei das CTI-Steuerungsmodul (530) eine Vorgangabwicklungseinheit (531) zum Erzeugen eines Vorgangs in Abhängigkeit vom Schaltsignal, das durch die CTI-Baugruppe eingegeben ist, eine CTI-Anwendungsprogrammierschnittstelle (533), nachfolgend API genannt, die CTI-Steuerungsfunktionen für die CTI-Baugruppe beinhaltet, und einen Arbeitsabschnitt (535) zum Aufrufen der CTI-Steuerungsfunktionen in einer gegebenen Reihenfolge von der CTI-API und Durchrühren der Telefonbasisaktion gemäß dem Hauptsteuerungsmodul umfasst.

3. System nach Anspruch 2, wobei die Telefonbasisaktion Telefonanwählen, Telefonabnehmen, Teletontrennen oder -auflegen, Schalterauslösung, Schalterablesen, Tondetektion, Sprachansageübermittlung, Sprachansagespeicherung, Sprechen und Hören beinhaltet.

4. System nach einem der Ansprüche 1 bis 3, wobei das Dolmetschungsmodul (550) einen Spracherkennungsabschnitt (551) zum Erkennen der durch die CTI eingegebenen Sprachansage und Umwandeln der erkannten Sprachansage in Text, einen Übersetzungsabschnitt (553) zum Übersetzen des Texts in eine vorgegebene Sprache und einen Sprachsyntheseabschnitt (555) zum Synthetisieren einer Sprache aus dem durch den Spracherkennungsabschnitt erkannten Text oder dem durch den Übersetzungsabschnitt übersetzten Text und Ausgeben der synthetisierten Sprache umfasst.

5. System nach Anspruch 1, wobei das Dolmetschungsszenario eine Umwandlungsaktion des vorliegenden Zustands gemäß einem vorliegenden Zustand und dem im CTI-Steuerungsmodul erzeugten Vorgang und Telefonbasisaktionen beinhaltet.

6. System nach Anspruch 5, wobei das Hauptsteuerungsmodul (570) einen Dolmetschungsszenario-Verwaltungsabschnitt (571) zum Auswählen der Umwandlungsaktion des vorliegenden Zustands und der Telefonbasisaktion auf Basis des vorgegebenen Dolmetschungsszenarios, wenn der Vorgang im CTI-Steuerungsmodul erzeugt ist, und einen Zustandumwandlungsabschnitt (573) zum Umwandeln des vorliegenden Zustands in den nächsten Zustand in Abhängigkeit von der durch den Dolmetschungsszenario-Verwaltungsabschnitt ausgewählten Umwandlungsaktion des vorliegenden Zustands umfasst.

7. Verfahren zum Simultandolmetschen mit Anrufdurchleitungssteuerung, umfassend die Schritte,
einen Telefonverbindungsschritt (S10, S20, S30, S40, S50, S60, S70) zum Einrichten eines Verkehrskanals zwischen einem Sprecher (100) und einem Hörer (300), wenn der Sprecher mit einem Simultandolmetschungssystem (500) gemäß einem vorgegebenen Dolmetschungsszenario einen Anschluss herstellt,
einen automatischen Dolmetschungsschritt (S80, S90, S100, S110, S120, S130, S140, S150), umfassend, wenn ein Vorgang in einem Steuerungsmodul (530) der Computer-Telefonie-Integration, nachfolgend CTI genannt, in Abhängigkeit von einem Schaltsignal erzeugt ist, das vom Sprecher oder Höher durch eine CTI-Baugruppe (510) eingegeben ist, Übersetzen einer eingegebenen Sprachansage des Sprechers oder Hörers in eine vorgegebene Sprache in Abhängigkeit vom erzeugten Vorgang auf Basis des vorgegebenen Dolmetschungsszenarios, und
einen Dolmetschungsübertragungsschritt (S160, S170, S180), umfassend ein Steuern der CTI-Baugruppe gemäß dem Dolmetschungsszenario und Übertragen der übersetzten Sprachansage zur anderen Partei gemäß dem vorgegebenen Dolmetschungsszenario,
**dadurch gekennzeichnet, dass** das vorgegebene Dolmetschungsszenario einen Aktionsfluss des Simultandolmetschungssystems definiert, wobei der Aktionsfluss den Telefonverbindungsschritt, den automatischen Dolmetschungsschritt und den Dolmetschungsübertragungsschritt umfasst,
und wobei die von der CTI-Baugruppe (510) durchgeführten Telefonbasisfunktionen als Arbeitseinheiten ausgebildet sind, die jeweils eine Abfolge von CTI-Steuerungsfunktionen umfassen.

8. Verfahren nach Anspruch 7, wobei der automatische Dolmetschungsschritt (S80, S90, S100, S110, S120, S130, S140, S150) umfasst:
Aufzeichnen einer eingegebenen Sprachansage vom Sprecher oder Hörer in Abhängigkeit von dem Vorgang auf Basis des vorgegebenen Dolmetschungsszenarios, wenn der Vorgang im CTI-Steuerungsmodul in Abhängigkeit vom Schaltsignal, das vom Sprecher oder Hörer durch die CTI-Baugruppe (S90, S100) eingegeben ist, erzeugt ist, und
Erkennen der aufgezeichneten Sprachansage und Übersetzen der erkannten Sprachansage in die vorgegebene Sprache durch ein Dolmetschungsmodul (550) gemäß dem vorgegebenen Dolmetschungsszenario (S110, S120, S130, S140, S150).

9. Verfahren nach Anspruch 8, wobei der Erkennungs- und Übersetzungsschritt (S110, S120, S130, S140, S150) umfasst:
Erkennen der aufgezeichneten Sprachansage und Umwandeln der erkannten Sprachansage in Text (S110, S130),
Übersetzen des Texts in die vorgegebene Sprache (S140) und Synthetisieren einer Sprache aus dem übersetzten Text (S150).

## Revendications

1. Système d'interprétation simultanée de type commande d'appel tiers (500), comprenant :
une carte de couplage de la téléphonie et de l'informatique, ci-après appelée carte de couplage CTI (510), destinée à établir un canal de trafic entre un appelant (100) et un appelé (300) ;
un module de commande de couplage CTI (530) pour générer un événement, en réponse à un signal de touche entré via la carte de couplage CTI, pour amener la carte de couplage CTI à mettre en oeuvre une action téléphonique de base ; et
un module d'interprétation (550) destiné à reconnaître la voix de l'appelant ou de l'appelé entrée via la carte de couplage CTI et à traduire le discours en une langue prédéterminée,
**caractérisé en ce que :**
le système comporte en outre un module de commande principal (570) permettant de commander des actions du module de commande de couplage CTI (530) selon un scénario d'interprétation prédéterminée, dans lequel le scénario d'interprétation prédéterminé définit un flux d'actions du système d'interprétation simultanée, le flux d'actions comprenant une étape de connexion de téléphone, une étape d'interprétation automatique et une étape de transmission de l'interprétation ; et
les actions téléphoniques de base mises en oeuvre par la carte de couplage CTI (510) sont configurées en tant que tâches unitaires comprenant chacune une séquence de fonctions de commande de couplage CTI.

2. Système selon la revendication 1, dans lequel le module de commande de couplage CTI (530) comprend un gestionnaire d'événements (531) destiné à générer l'événement en réponse au signal de touche entré via la carte de couplage CTI, une interface de programmation d'applications de couplage CTI (533), ci-après appelée interface API, comportant des fonctions de commande de couplage CTI pour la carte de couplage CTI ; et une zone fonctionnelle (535) pour appeler les fonctions de commande de couplage CTI dans un ordre donné à partir de l'interface API de couplage CTI et pour mettre en oeuvre l'action téléphonique de base selon le module de commande principal.

3. Système selon la revendication 2, dans lequel l'action téléphonique de base inclut l'une des actions parmi une numérotation téléphonique, une réponse à un appel téléphonique, une déconnexion ou un raccrochage de téléphone, un appui sur une touche, une lecture de touche, une détection de tonalité, une transmission vocale, un stockage de la voix, parler et écouter.

4. Système selon l'une quelconque des revendications 1 à 3, dans lequel le module d'interprétation (550) comporte une zone de reconnaissance vocale (551) pour reconnaître la voix entrée via le couplage CTI et convertir la voix reconnue en texte ; une zone de traduction (553) pour traduire le texte en une langue prédéterminée, et une zone de synthèse vocale (555) pour synthétiser un discours à partir du texte reconnu par la zone de reconnaissance vocale du du texte traduit via la zone de traduction et générer en sortie la voix synthétisée.

5. Système selon la revendication 1, dans lequel le scénario d'interprétation comporte une action de conversion d'état en cours sélectionnée selon un état en cours et l'événement vénéré dans le module de commande de couplage CTI, ainsi que les actions téléphoniques de base.

6. Système selon la revendication 5, dans lequel le module de commande principal (570) comporte une zone de gestion de scénarios d'interprétation (571) pour sélectionner l'action de conversion d'état en cours et l'action téléphonique de base sur la base du scénario d'interprétation prédétermine lorsque l'événement est généré dans le module de commande de couplage CTI, et une zone de conversion d'état (573) pour convertir l'état en cours en l'état successif en réponse à l'action de conversion d'état en cours sélectionnée à partir de la zone de gestion de scénarios d'interprétation.

7. Procédé d'interprétation simultanée de type commande d'appel tiers, comprenant les étapes ci-après :
une étape de connexion de téléphone (S10, S30, S30, S40, S50, S60, S70) consistant à établir un canal de trafic entre un appelant (100) et un appelé (300) lorsque l'appelant se connecte à un système d'interprétation simultanée (500) selon un scénario d'interprétation prédéterminée ;
une étape d'interprétation automatique (S80, S90, S100, S110, S120, S130, S140, S150) consistant à, lorsqu'un événement est généré dans un module de commande de couplage de la téléphonie et de l'informatique, ci-après appelé module de commande de couplage CTI (530) en réponse à un signal de touche entré par l'appelant ou l'appelé via une carte de couplage CTI (510), traduire une voix entrée de l'appelant ou de l'appelé dans une langue prédéterminé en réponse à l'événement généré sur la base du scénario d'interprétation prédéterminé ; et
une étape de transmission d'interprétation (S160, S170, S180) consistant à commander la carte de couplage CTI selon le scénario d'interprétation et transmettre la voix traduite à l'autre partie selon le scénario d'interprétation prédéterminé,
**caractérisé en ce que** le scénario d'interprétation prédéterminé définit un flux d'actions du système d'interprétation simultanée, le flux d'actions comprenant l'étape de connexion de téléphone, l'étape d'interprétation automatique et l'étape de transmission de l'interprétation, et
dans lequel les fonctions téléphoniques de base mises en oeuvre par la carte de couplage CTI (510) sont configurées en tant que tâches unitaires comprenant chacune une séquence de fonctions de commande de couplage CTI.

8. Procédé selon la revendication 7, dans lequel l'étape d'interprétation automatique (S80, S90, S100, S110, S120, S130, S140, S150) comporte les étapes ci-dessous consistant à :
enregistrer la voix entrée de l'appelant ou de l'appelé en réponse à l'événement sur la base du scénario d'interprétation prédéterminé lorsque l'événement est généré dans le module de commande de couplage CTI en réponse au signal de touche entré par l'appelant ou l'appelé via la carte de couplage CTI (S90, S100), et
reconnaître l'enregistrement vocal et traduire le discours reconnu en la langue prédéterminée via un module d'interprétation (550) selon le scénario d'interprétation prédéterminé (S110, S120, S130, S140, S150).

9. Procédé selon la revendication 8, dans lequel l'étape de reconnaissance et de traduction (S110, S120, S130, S140, S150) comprend les étapes ci-dessous consistant à:
reconnaître l'enregistrement vocal et convertir l'enregistrement vocal en texte (S110, S130) ;
traduire le texte dans la langue prédéterminée (S140) ; et
synthétiser une voix à partir du texte traduit (S150).
